(19) Europäisches Patentamt
European Patent Office
Office européen des brevets

(11) Veröffentlichungsnummer: **0 446 418 B1**

(12) **EUROPÄISCHE PATENTSCHRIFT**

(45) Veröffentlichungstag der Patentschrift: **11.01.95**

(51) Int. Cl.$^{6}$: **G01F 23/24**

(21) Anmeldenummer: **90120522.9**

(22) Anmeldetag: **26.10.90**

# (54) Füllstandsgeber.

(30) Priorität: **14.03.90 DE 4008030**

(43) Veröffentlichungstag der Anmeldung:
**18.09.91 Patentblatt 91/38**

(45) Bekanntmachung des Hinweises auf die Patenterteilung:
**11.01.95 Patentblatt 95/02**

(84) Benannte Vertragsstaaten:
**DE FR IT SE**

(56) Entgegenhaltungen:
**DE-A- 2 946 585**
**DE-A- 3 601 100**

(73) Patentinhaber: **VDO Adolf Schindling AG**
**Gräfstrasse 103**
**D-60487 Frankfurt (DE)**

(72) Erfinder: **Kotulla, Günther**
**Rosserstrasse 7a**
**W-6231 Schwalbach (DE)**

(74) Vertreter: **Klein, Thomas, Dipl.-Ing. (FH)**
**Sodener Strasse 9**
**D-65824 Schwalbach/Ts. (DE)**

**EP 0 446 418 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen Füllstandsgeber, bei welchem die Veränderung eines Sondensignals während einer Meßzeit ausgewertet wird und wobei das Sondensignal einem Eingang eines Analog/Digital-Wandlers zugeführt wird.

Bei elektro-thermischen Füllstandsgebern, die zur Messung des Kraftstoffvorrats in Kraftfahrzeugen dienen, ist ein elektrischer Leiter mit temperaturabhängigem Widerstand je nach Füllstand verschieden weit mit Kraftstoff bedeckt. Über eine Konstantstromquelle wird in regelmäßigen Abständen ein Strom zugeführt, der einer Erwärmung des Leiters und damit auch eine Erhöhung des Widerstandes und des Spannungsabfalls bewirkt. Die Temperatur- und die Widerstandserhöhung sind an den mit Kraftstoff bedeckten Stellen des Leiters durch die kühlende Wirkung des Kraftstoffs geringer als oberhalb des Kraftstoffspiegels. Daher ist die Zunahme des Spannungsabfalls nach dem Einschalten des Sondenstroms vom Füllstand abhängig.

Bei bekannten Füllstandsgebern dieser Art (DE 29 46 585 A1, DE 36 01 100 A1) wird das Sondensignal über einen Analog/Digital-Wandler einem Mikrocomputer zugeführt, der die Sondenspannung auswertet und digitale Signale und/oder Analogsignale an entsprechende Anzeigevorrichtungen ausgibt. Da der durch das Einschalten des Meßstroms bedingte Spannungssprung wesentlich größer als die auszuwertende Veränderung der Sondenspannung ist, bleibt für letztere nur ein relativ kleiner Teil des Eingangsspannungsbereichs des Analog/Digital-Wandlers übrig. Um trotzdem eine ausreichende Meßgenauigkeit zu erzielen, sind Analog/Digital-Wandler mit einer hohen Auflösung erforderlich.

Aufgabe der Erfindung ist es, einen Füllstandsgeber anzugeben, der mit einem preiswerteren Analog/Digital-Wandler versehen ist und trotzdem eine hohe Genauigkeit aufweist.

Ein Füllstandsgeber gemäß dem ersten Absatz der Beschriebung ist erfindungsgemäß dadurch gekennzeichnet, daß vom Sondensignal eine Gleichspannung derart subtrahiert wird, daß das resultierende Signal zu Beginn der Meßzeit an einer unteren Grenze des Eingangsspannungsbereichs des Analog/Digital-Wandlers liegt, und daß das resultierende Signal derart verstärkt wird, daß es bei maximal zu erwartender Veränderung in der Nähe der anderen Grenze des Eingangsspannungsbereichs des Analog/Digital-Wandlers liegt.

Durch die erfindungsgemäßen Maßnahmen kann ein preiswerter 8-bit-Analog/Digital-Wandler verwendet werden, der unter anderem als integrierter Bestandteil eines sogenannten Ein-Chip-Mikrocomputers zur Verfügung steht. Die erfindungsgemäßen Maßnahmen sind nicht nur für elektro-thermische Sonden geeignet, sondern können im Zusammenhang mit allen Sonden angewendet werden, deren Signal eine während einer Meßzeit veränderliche Komponente aufweist, welche die zu messende Größe wiedergibt.

Eine Weiterbildung der Erfindung besteht darin, daß dem Analog/Digital-Wandler ein Mikrocomputer nachgeschaltet ist, daß der Analog/Digital-Wandler über mindestens zwei Eingänge verfügt, daß ein erster Eingang mit dem Ausgang eines Differenzverstärkers verbunden ist, daß dem invertierenden Eingang des Differenzverstärkers von dem Mikrocomputer ein Analogsignal zuführbar ist und daß dem nichtinvertierenden Eingang des Differenzverstärkers und einem zweiten Eingang des Analog/Digital-Wandlers das Sondensignal zuführbar ist.

Gemäß einer anderen Weiterbildung der Erfindung ist der Mikrocomputer mit einem Programm programmiert, das folgende Schritte umfaßt:

- zu Beginn der Meßzeit wird ein Sondenstrom eingeschaltet,
- der am zweiten Eingang des Analog/Digital-Wandlers liegende Spannungswert wird eingelesen,
- der eingelesene Wert wird um ein Inkrement vermindert und als Analogsignal dem invertierenden Eingang des Differenzverstärkers zugeführt,
- die Spannung am ersten Eingang des Analog/Digital-Wandlers wird eingelesen,
- der Strom durch die Sonde wird abgeschaltet,
- die über den ersten Eingang des Analog/Digital-Wandlers eingelesene resultierende Spannung wird ausgewertet,
- das Ergebnis wird über eine geeignete Schnittstelle ausgegeben.

Zur Bildung des Analogsignals kann ferner vorgesehen sein, daß das Analogsignal durch Pulsbreitenmodulation und anschließende Tiefpaßfilterung gewonnen wird oder daß zur Ableitung des Analogsignals ein R/2R-Netzwerk vorgesehen ist, das mit einer Parallel-Schnittstelle des Mikrocomputers verbunden ist.

Die Erfindung läßt zahlreiche Ausführungsformen zu. Eine davon ist schematisch in der Zeichnung anhand mehrerer Figuren dargestellt und nachfolgend beschrieben. Es zeigt:

Fig. 1 verschiedene Zeitdiagramme des Sondensignals bei einem bekannten Füllstandsgeber und bei einem erfindungsgemäßen Füllstandsgeber,

Fig. 2 ein Blockschaltbild eines erfindungsgemäßen Füllstandsgebers und

Fig. 3 ein Flußdiagramm eines Programms für den Mikrocomputer bei dem Füllstandsgeber gemäß Fig. 2.

Die Figuren 1a) bis c) zeigen den Verlauf des Sondensignals U bei einem bekannten Füllstandsgeber für verschiedene Umgebungstemperaturen. Der Eingangsspannungsbereich des Analog/Digital-Wandlers liegt zwischen ADCMIN und ADCMAX. Zum Zeitpunkt $t_1$ wird der Sondenstrom eingeschaltet, so daß die Sondenspannung U auf den Wert $U_0$ springt. Wie ein Vergleich zwischen den Figuren 1a) bis c) zeigt, ist $U_0$ stark von der Umgebungstemperatur abhängig. Der weitere Verlauf der Sondenspannung U hängt vom Füllstand ab, ist jedoch in Fig. 1 lediglich für einen Füllstand dargestellt. Am Ende der Meßzeit bei $t_2$ wird der Spannungsanstieg $\delta U$ gemessen und ausgewertet. Danach wird der Sondenstrom wieder abgeschaltet. Eine neue Messung kann erfolgen, wenn sich die Temperatur der Sonde bzw. des temperaturabhängigen Leiters wieder an die Umgebungstemperatur angepaßt hat.

Aus den Figuren 1a) bis c) ist ersichtlich, daß ein großer Teil des Eingangsspannungsbereichs des Analog/Digital-Wandlers für die Spannung $U_0$ "verbraucht" wird. Die auszuwertende Spannung bzw. die Spannungsänderung $\delta U$ erstreckt sich nur über einen kleinen Teil der Quantisierungsstufen des Analog/Digital-Wandlers und ist daher entsprechend ungenau. Um eine erforderliche Genauigkeit bei der Quantisierung von $\delta U$ zu erreichen, ist daher ein Analog/Digital-Wandler hoher Auflösung von beispielsweise 10 bit erforderlich.

Bei dem erfindungsgemäßen Füllstandsgeber wird die Sondenspannung $U_0$ (Fig. 1d)), welche unmittelbar nach dem Einschalten des Sondenstroms herrscht, gemessen, um eine 1 in der geringstwertigen Binärstelle vermindert und von dem Sondensignal subtrahiert. Die resultierende Spannung wird derart verstärkt, daß die Spannungsänderung $\delta U$ den weitaus größten Teil des Eingangsspannungsbereichs des Analog/Digital-Wandlers einnimmt, was in Fig. 1e) dargestellt ist. Durch die Dekrementierung bei der geringstwertigen Binärstelle wird erreicht, daß $U_0'$ mit Sicherheit innerhalb des Bereichs des Analog/Digital-Wandlers liegt.

Bei dem als Blockschaltbild in Fig. 2 dargestellten Ausführungsbeispiel ist ein Ein-Chip-Mikrocomputer 1 vom Typ 68 HC 05 B6 vorgesehen, der in an sich bekannter Weise außer der zentralen Verarbeitungseinheit CPU verschiedene Einheiten umfaßt, von denen der Analog/Digital-Wandler ADC, zwei Pulsbreitenmodulatoren PWM A und PWM B und verschiedene im einzelnen nicht zu erläuternde Schnittstellen zur Erläuterung der Erfindung von Bedeutung sind. Der Mikrocomputer 1 wird über eine Schaltung 2 zur Spannungsstabilisierung vom Pluspol 3 der im übrigen nicht dargestellten Fahrzeugbatterie mit Betriebsspannung versorgt. Über eine Konstantstromquelle 4, die über einen Steuereingang 5 geschaltet werden kann, wird dem temperaturabhängigen Leiter 6 der Sonde ein konstanter Strom eingeprägt.

Zur Messung der Sondenspannung sind die Anschlüsse 7, 8 des Leiters 6 mit Eingängen des Mikrocomputers 1 verbunden, wobei die Spannung am Anschluß 7 als Bezugsspannung $U_{ref}$ dient, um Fehler durch einen Spannungsabfall zwischen dem Anschluß 7 und Massepotential zu eliminieren. Der Anschluß 8 ist mit einem Eingang A02 des Analog/Digital-Wandlers ADC verbunden. Der Analog/Digital-Wandler ADC weist einen weiteren Eingang A01 auf. Üblicherweise werden bei derartigen Analog/Digital-Wandlern mehrere Eingänge durch Vorschalten eines Multiplexers gebildet, was jedoch in Fig. 2 nicht dargestellt ist.

Der Eingang A01 ist mit dem Ausgang eines Differenzverstärkers 9 verbunden, dessen nicht invertierender Eingang mit dem Anschluß 8 der Sonde und dessen invertierender Eingang über ein Tiefpaßfilter 10 mit dem Ausgang des Pulsbreitenmodulators PWM A verbunden ist.

Ein Ausgang des Pulsbreitenmodulators PWM B ist ebenfalls über ein Filter 11 mit einer Stromsenke 12 verbunden, an deren Ausgang 13 ein analoges Anzeigeinstrument angeschlossen werden kann. Für eine digitale Anzeige ist an den Mikrocomputer 1 ein Treiber 14 angeschlossen, an dessen Ausgang 15 digitale Signale zur Verfügung stehen, welche den jeweiligen Füllstand darstellen.

In regelmäßigen Abständen wird vom Mikrocomputer 1 ein Signal zum Einschalten des Sondenstroms an die Konstantstromquelle 4 gegeben. Zu diesem Zeitpunkt ist der Eingang A02 an den Analog/Digital-Wandler ADC angeschlossen. Die Spannung $U_0$ wird in die zentrale Verarbeitungseinheit CPU eingelesen, um eine 1 in der geringstwertigen Binärstelle verringert und über den Pulsbreitenmodulator PWM A ausgegeben. Im Tiefpaßfilter 10 wird daraus eine entsprechende Gleichspannung abgeleitet, die mit Hilfe des Differenzverstärkers 9 vom Sondensignal subtrahiert wird.

Die resultierende Spannung wird verstärkt und dem Eingang 101 zugeführt, der dann mit dem Analog/Digital-Wandler verbunden ist. Die Spannungsänderung $\delta U$ wird in an sich bekannter Weise in einen Wert für den Füllstand umgerechnet und als Analog- bzw. Digitalsignal über die Ausgänge 13 und 15 ausgegeben.

Bei dem in Fig. 3 als Flußdiagramm dargestellten Programm für den Mikrocomputer 1 wird nach einem Start bei 21 bei 22 der Sondenstrom eingeschaltet. Unmittelbar danach wird im Programmteil 23 die Spannung $U_0$ über den Eingang A02 und den Analog/Digital-Wandler ADC eingelesen. Daraufhin wird bei 24 die an den invertierenden Eingang des Differenzverstärkers abzugebende Spannung UOPV1 = $U_0$-1 gebildet. Diese wird dann bei 25 dem invertierenden Eingang des Differenzverstärkers 9 (Fig. 2) zugeführt, worauf am Eingang A01 die Differenz zwischen dem Sondensignal $U_0$ und der Spannung UOPV1 ansteht. Diese steigt in Abhängigkeit vom Füllstand entsprechend Fig. 1e an. Dabei wird die Differenz zwischen dem Sondensignal und der Spannung UOPV1 um beispielsweise v = 20 verstärkt. Im Programmteil 26 wird die Spannung $\delta U \cdot v$ über den Eingang A01 und den Analog/Digital-Wandler in den Mikrocomputer 1 eingelesen. Danach wird bei 27 der Sondenstrom ausgeschaltet. In einem Programm 28 erfolgt die Auswertung von $\delta U \cdot v$, worauf nach einer Ergebnisausgabe bei 29 das Programm mit dem Einschalten des Sondenstroms bei 20 wiederholt wird.

## Patentansprüche

1. Füllstandsgeber, bei welchem die Veränderung eines Sondensignals während einer Meßzeit ausgewertet wird und wobei das Sondensignal einem Eingang eines Analog/Digital-Wandlers zugeführt wird, dadurch gekennzeichnet, daß vom Sondensignal eine Gleichspannung derart subtrahiert wird, daß das resultierende Signal zu Beginn der Meßzeit an einer unteren Grenze (ADC MIN) des Eingangsspannungsbereichs des Analog/Digital-Wandlers (ADC) liegt, und daß das resultierende Signal derart verstärkt wird, daß es bei maximal zu erwartender Veränderung in der Nähe der anderen Grenze (ADC MAX) des Eingangsspannungsbereichs des Analog/Digital-Wandlers (ADC) liegt.

2. Füllstandsgeber nach Anspruch 1, dadurch gekennzeichnet, daß dem Analog/Digital-Wandler (ADC) ein Mikrocomputer (1) nachgeschaltet ist, daß der Analog/Digital-Wandler (ADC) über mindestens zwei Eingänge (A01, A02) verfügt, daß ein erster Eingang (A01) mit dem Ausgang eines Differenzverstärkers (9) verbunden ist, daß dem invertierenden Eingang des Differenzverstärkers (9) von dem Mikrocomputer (1) ein Analogsignal zuführbar ist und daß dem nichtinvertierenden Eingang des Differenzverstärkers (9) und einem zweiten Eingang (A02) des Analog/Digital-Wandlers (ADC) das Sondensignal zuführbar ist.

3. Füllstandsgeber nach Anspruch 2, bei dem der Microcomputer mit einem Programm programmiert ist, das folgende Schritte umfaßt:
   - zu Beginn der Meßzeit wird ein Sondenstrom eingeschaltet,
   - der am zweiten Eingang des Analog/Digital-Wandlers liegende Spannungswert wird eingelesen,
   - der eingelesene Wert wird um ein Inkrement vermindert und als Analogsignal dem invertierenden Eingang des Differenzverstärkers zugeführt,
   - die Spannung am ersten Eingang des Analog/Digital-Wandlers wird eingelesen,
   - der Strom durch die Sonde wird abgeschaltet,
   - die über den ersten Eingang des Analog/Digital-Wandlers eingelesene resultierende Spannung wird ausgewertet,
   - das Ergebnis wird über eine geeignete Schnittstelle ausgegeben.

4. Füllstandsgeber nach Anspruch 2, dadurch gekennzeichnet, daß das Analogsignal durch Pulsbreitenmodulation und anschließende Tiefpaßfilterung gewonnen wird.

5. Füllstandsgeber nach Anspruch 2, dadurch gekennzeichnet, daß zur Ableitung des Analogsignals ein R/2R-Netzwerk vorgesehen ist, das mit einer Parallel-Schnittstelle des Mikrocomputers verbunden ist.

## Claims

1. A level transmitter, in which the change in a probe signal is evaluated during a measuring period and wherein the probe signal is fed to an input of an analogue-digital converter, characterised in that a DC voltage is subtracted from the probe signal in such a way that at the start of the measuring period the resulting signal is situated at a lower limit (ADC MIN) of the input voltage range of the analogue-digital converter (ADC), and that the resulting signal is amplified in such a way that at the maximum change to be anticipated it is situated in the vicinity of the other limit (ADC MAX) of the input voltage range of the analogue-digital converter (ADC).

2. A level transmitter according to claim 1, characterised in that a microcomputer (1) is connected downstream of the analogue-digital converter (ADC), that the analogue-digital converter (ADC) is provided with at least two inputs (A01, A02), that a first input (A01) is connected to the output of a differential amplifier (9), that an analogue signal can be fed from the microcomputer (1) to the inverting input of the differential amplifier (9), and that the probe signal can be fed to the non-inverting input of the differential amplifier (9) and to a second input (A02) of the analogue-digital converter (ADC).

**3.** A level transmitter according to claim 2, wherein the microcomputer is programmed with a program which comprises the following steps:
- at the start of the measuring period a probe current is switched on,
- the voltage value situated at the second input of the analogue-digital converter is read in,
- the value read in is decreased by one increment and is fed as an analogue signal to the inverting input of the differential amplifier,
- the voltage at the first input of the analogue-digital converter is read in,
- the current through the probe is switched off,
- the resulting voltage read in via the first input of the analogue-digital converter is evaluated,
- the result is output via a suitable interface.

**4.** A level transmitter according to claim 2, characterised in that the analogue signal is obtained by pulse width modulation and subsequent low-pass filtering.

**5.** A level transmitter according to claim 2, characterised in that an R/2R network, which is connected to a parallel interface of the microcomputer, is provided for deriving the analogue signal.

**Revendications**

**1.** Indicateur de niveau dans lequel le changement d'un signal de sonde pendant un temps de mesure est exploité et le signal de sonde est appliqué à une entrée d'un convertisseur analogique/numérique, caractérisé en ce qu'une tension continue est soustraite du signal de sonde, de manière que le signal résultant corresponde à une limite inférieure (ADC MIN) de la plage de tension d'entrée du convertisseur analogique/numérique (ADC) au début du temps de mesure, et que le signal résultant est amplifié de manière que, pour le changement maximal à prévoir, il soit voisin de l'autre limite (ADC MAX) de la plage de tension d'entrée du convertisseur analogique/numérique (ADC).

**2.** Indicateur de niveau selon la revendication 1, caractérisé en ce que le convertisseur analogique/numérique (ADC) est suivi d'un micro-ordinateur (1), que le convertisseur analogique/numérique (ADC) possède au moins deux entrées (A01, A02), qu'une première entrée (A01) est reliée à la sortie d'un amplificateur différentiel (9), qu'un signal analogique est applicable à partir du micro-ordinateur (1) à l'entrée inverseuse de l'amplificateur différentiel (9) et que le signal de sonde est applicable à l'entrée non inverseuse de l'amplificateur différentiel (9) et à une seconde entrée (A02) du convertisseur analogique/numérique (ADC).

**3.** Indicateur de niveau selon la revendication 2, dans lequel le micro-ordinateur est programmé avec un programme comprenant les pas suivants:
- un courant de sonde est enclenché au début du temps de mesure,
- la valeur de tension présente sur la seconde entrée du convertisseur analogique/numérique est mémorisée,
- la valeur mémorisée est diminuée d'un incrément et appliquée comme signal analogique à l'entrée inverseuse de l'amplificateur différentiel,
- la tension sur la première entrée du convertisseur analogique/numérique est mémorisée,
- le courant parcourant la sonde est coupé,
- la tension résultante, mémorisée à travers la première entrée du convertisseur analogique/numérique, est exploitée et
- le résultat est délivré en sortie à travers une interface appropriée.

**4.** Indicateur de niveau selon la revendication 2, caractérisé en ce que le signal analogique est obtenu par modulation d'impulsions en durée et filtrage passebas consécutif.

**5.** Indicateur de niveau selon la revendication 2, caractérisé en ce que, pour la dérivation du signal analogique, on a prévu un réseau R/2R relié à une interface parallèle du micro-ordinateur.

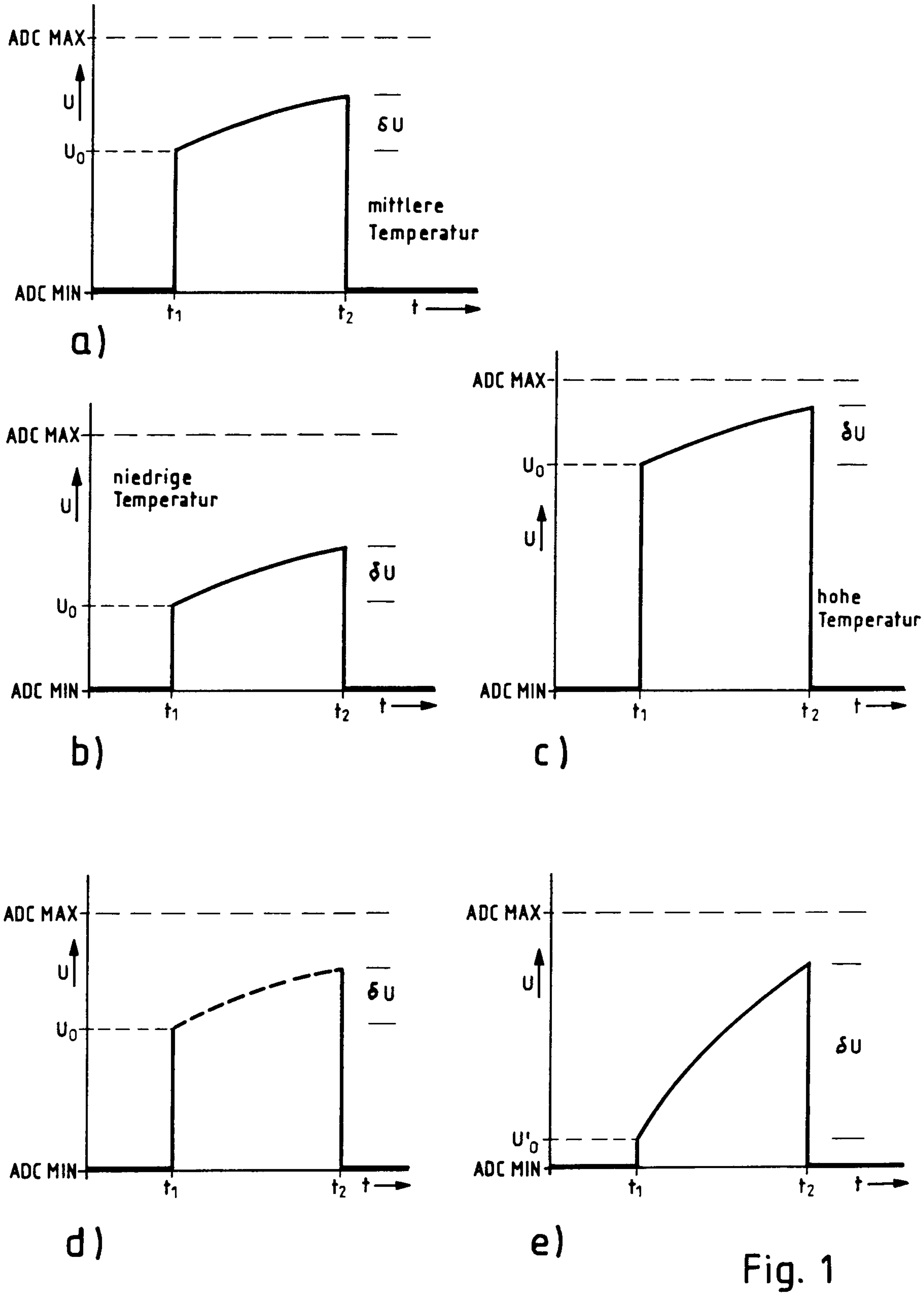
ADC MAX
U
δU
U0
mittlere Temperatur
ADC MIN
t1
t2
t
a)
ADC MAX
niedrige Temperatur
U
δU
U0
ADC MIN
t1
t2
t
b)
ADC MAX
δU
U0
U
hohe Temperatur
ADC MIN
t1
t2
t
c)
ADC MAX
U
δU
U0
ADC MIN
t1
t2
t
d)
ADC MAX
U
δU
U'0
ADC MIN
t1
t2
t
e)

Fig. 1

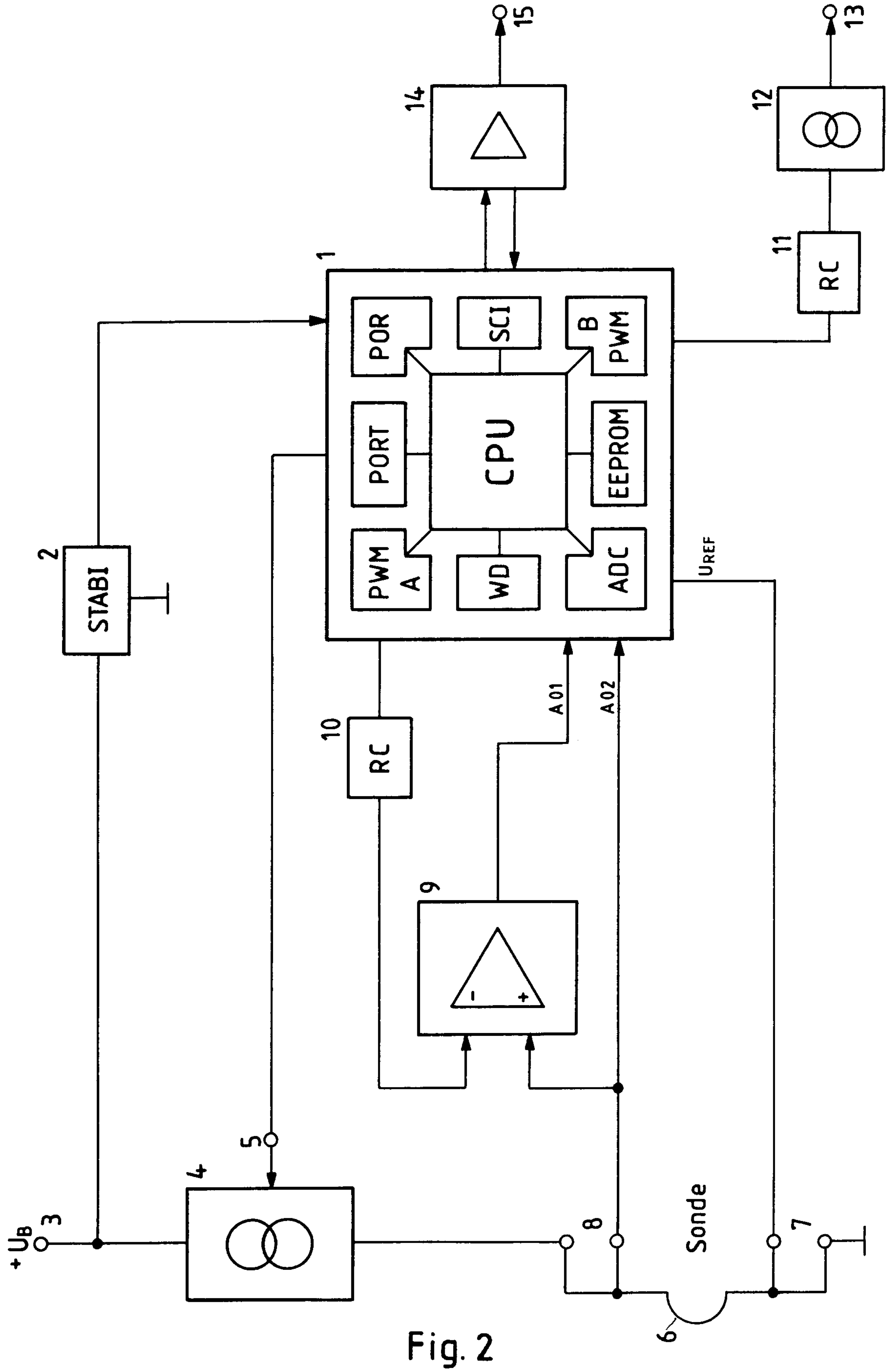
1
2
STABI
+UB
3
4
5
6
7
8
Sonde
9
10
RC
11
RC
12
13
14
15
POR
SCI
B PWM
PORT
CPU
EEPROM
PWM A
WD
ADC
UREF
A01
A02

Fig. 2

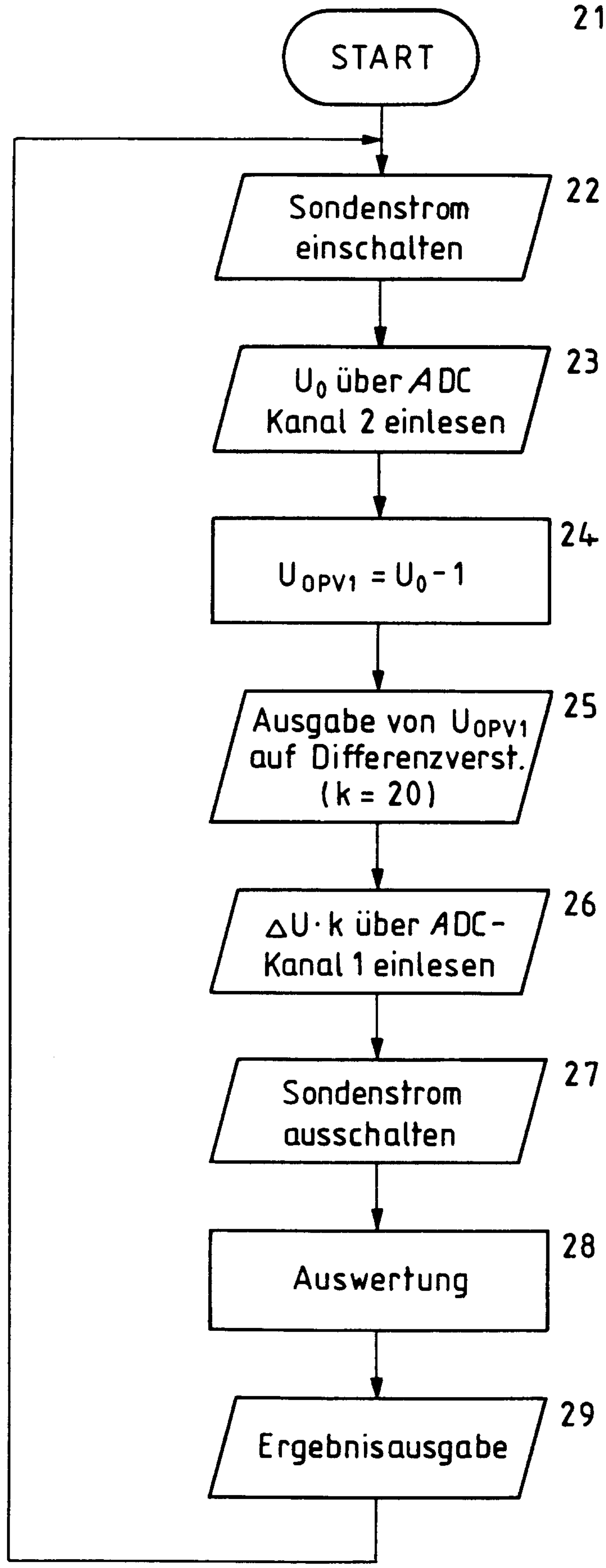
START
21
Sondenstrom einschalten
22
U0 über ADC Kanal 2 einlesen
23
UOPV1 = U0 - 1
24
Ausgabe von UOPV1 auf Differenzverst. (k = 20)
25
ΔU·k über ADC-Kanal 1 einlesen
26
Sondenstrom ausschalten
27
Auswertung
28
Ergebnisausgabe
29

Fig. 3